# EUROPEAN PATENT SPECIFICATION

(11) **EP 3 718 845 B1**
(45) Date of publication and mention of the grant of the patent: **10.01.2024**
(21) Application number: 18883506.0
(22) Date of filing: 22.11.2018
(51) Int. Cl.: B60W 30/00, B60W 30/045, B62D 1/28, B62D 15/02, B60W 30/12, B60K 28/06, G05D 1/02, B60W 30/18

(54) **METHOD FOR EXTRACTING EMPIRICAL DATA ABOUT VEHICLE TRAVEL AND RELATED DEVICE**
VERFAHREN ZUM EXTRAHIEREN VON EMPIRISCHEN DATEN ÜBER FAHRZEUGFAHRTEN UND ZUGEHÖRIGE VORRICHTUNG
PROCÉDÉ D'EXTRACTION DE DONNÉES EMPIRIQUES CONCERNANT LE DÉPLACEMENT D'UN VÉHICULE ET DISPOSITIF ASSOCIÉ

(30) Priority: 28.11.2017 CN 201711211788
(43) Date of publication of application: 07.10.2020
(73) Proprietor: Hunan CRRC Times Electric Vehicle Co., Ltd, Zhuzhou, Hunan 412001 (CN)
(72) Inventor: TANG, Guangdi, Zhuzhou Hunan 412001 (CN); WANG, Wenming, Zhuzhou Hunan 412001 (CN); WANG, Wei, Zhuzhou Hunan 412001 (CN); PENG, Zaiwu, Zhuzhou Hunan 412001 (CN); ZHU, Tian, Zhuzhou Hunan 412001 (CN); PENG, Zhichuan, Zhuzhou Hunan 412001 (CN); YANG, Jiejun, Zhuzhou Hunan 412001 (CN)
(74) Representative: Herrmann, Uwe
(86) International application number: PCT/CN2018/116905
(87) International publication number: WO 2019/105273

(56) References cited:
- EP-A2- 2 042 399
- WO-A1-2015/129175
- CN-A- 105 892 471
- CN-A- 105 912 814
- CN-A- 106 184 223
- CN-A- 107 390 682
- JP-A- 2001 350 521
- JP-A- 2006 056 473
- US-A1- 2013 166 159

## Description

The application claims the priority to Chinese Patent Application No.201711211788.0, titled "METHOD FOR EXTRACTING EMPIRICAL DATA ABOUT VEHICLE DRIVING AND RELATED DEVICE", filed on November 28, 2017 with the China National Intellectual Property Administration.

### TECHNICAL FIELD

The present disclosure relates to the technical field of vehicle automatic control, and in particular to a method and device for extracting empirical data about vehicle driving, and a vehicle.

### BACKGROUND

D1 (JP2001350521A) discloses an automatic steering device for a vehicle equipped with a controller for controlling the steering angle. When the vehicle travels along a lane, the equipped controller detects a sideslip of the vehicle, and the controller does not increase the steering angle when the sideslip of the vehicle is detected.

D2 (JP2006056473A) discloses an electric power steering device capable of obtaining good steering feeling and high steering stability. The electric power steering device includes a steering range estimating means for estimating a steering range in which a steering wheel has been started to turn at not less than predetermined vehicular speed and from a straight-ahead state; an actual steering stiffness calculating means for calculating steering stiffness; a deviation calculating means for calculating a deviation between the calculated actual steering stiffness and target steering stiffness stored in advance; and a correcting means for correcting a control map in case that the deviation is not less than a predetermined value.

JP2001 350521 A discloses in particular a method for extracting empirical data about vehicle driving, comprising:obtaining driving data of a vehicle during driving, and determining whether the vehicle performs a steering operation based on the driving data;determining whether the vehicle is in a stable state during the steering operation based on the driving data, if the vehicle performs the steering operation; and processing and saving the driving data as empirical data to be used in an automatic driving process, if the vehicle is in the stable state during the steering operation.

With the development of science and technology, artificial intelligence technology has gradually entered the horizon of ordinary consumers, constantly enriching the functions and types of artificial intelligence terminals, thereby greatly facilitating the daily life of ordinary consumers. Intelligent driving technology is the most prominent in the field of artificial intelligence. With the intelligent driving technology, a vehicle can safely drive to a destination with little or no manual intervention during the driving process, thereby greatly simplifying the driving process, making transportation more convenient and effective, and reducing the number of accidents caused by people.

However, there are many technical problems to be solved in the field of intelligent driving. Especially in the automatic operation of the vehicle, the problem is how to safely and stably realize steering operations such as turning operation and lane-change operation. In automatic driving, a corresponding relationship between maximum steering angles and steering speeds in an automatic steering process directly affects stability of the vehicle in driving. For example, excessively high steering speed and excessively large steering angle can easily cause the vehicle to lose control of steering and cause safety accidents such as vehicle's rollover. Especially for a passenger car, the risk of rollover is greater due to a higher center of gravity of the passenger car.

Generally, according to a current existing technical solution, a maximum steering angle of a vehicle is calculated in real time based on a current driving speed of the vehicle and a ground friction coefficient, thus to control a steering assist mechanism to apply a force to a steering wheel to rotate the steering wheel and limit a maximum steering angle of the vehicle.

In another technical solution for steering, based on a corresponding relationship between curvature radii of different curves and speed thresholds which is pre-stored in a control unit, image information such as lane lines and bollards at road edge or edge lane lines are collected to analyze a position of a vehicle during driving, a curvature radius of a curve, a driving angle of the vehicle, and a distance from the vehicle to roadside, thus to control a torque of the steering wheel required by the vehicle in turning, thereby realizing automatic steering of the vehicle in the curve.

However, situation is complicated in actual driving. Data for steering determination in the above technical solutions is all based on general data, and complex information in the actual situation cannot be processed, thus the problem in steering operations in automatic driving cannot be better solved, reducing the stability of the vehicle in driving and increasing the risk of accidents.

Therefore, it is a key issue for those skilled in the art that how to improve the stability of automatic steering for the vehicle in driving.

### SUMMARY

A method for extracting empirical data about vehicle driving, and a vehicle are provided in the present disclosure. By obtaining driving data of the vehicle during a stable steering operation and using the driving data as empirical data in an automatic driving operation, it is possible to avoid single structure of steering data in the automatic driving, so as to make a steering determination based on empirical data in the steering process, improve stability of the vehicle in the driving and steering operations, and keep safe driving of the vehicle.

In order to solve the above technical problems, the invention is set out in the appended set of claims.

By obtaining driving data of the vehicle during a stable steering operation and using the driving data as empirical data in an automatic driving operation, it is possible to avoid single structure of steering data in the automatic driving, and thus to make steering determination in the steering process based on empirical data, improve stability of the vehicle in the driving and steering operations, and keep safe driving of the vehicle.

Further, a steering trajectory may be obtained by performing a calculation on the driving data, and the steering trajectory may be used as steering data in the automatic driving operation, to improve the stability of the vehicle during the automatic driving operation.

The vehicle further provided in the present disclosure has the above beneficial effects, which will not be repeated herein.

### BRIEF DESCRIPTION OF THE DRAWINGS

The drawings to be used in the description of the embodiments or the conventional technology are described briefly as follows, in order to clearly illustrate the technical solutions according to the embodiments of the present disclosure or according to the conventional technology. It is apparent that the drawings in the following description are only some embodiments of the present disclosure. For those skilled in the art, other drawings may be obtained according to these drawings without any creative efforts.
Figure 1 is a flow chart of a method for extracting empirical data about vehicle driving according to an embodiment of the present disclosure;
Figure 2 is a flow chart of a method for extracting empirical data about vehicle driving according to another embodiment of the present disclosure;
Figure 3 is a flow chart of a method for extracting empirical data about vehicle driving according to still another embodiment of the present disclosure; and
Figure 4 is a schematic structural diagram of a device for extracting empirical data about vehicle driving according to an embodiment of the present disclosure.

### DETAILED DESCRIPTION OF THE EMBODIMENTS

A method and device for extracting empirical data about vehicle driving, and a vehicle are provided in the present disclosure. By obtaining driving data of the vehicle during a stable steering operation and using the driving data as empirical data in an automatic driving operation, it is possible to avoid single structure of steering data in automatic driving, thus to make a steering determination based on empirical data in the steering process, improve stability of the vehicle in the driving and steering operations, and keep safe driving of the vehicle.

In order to make the objectives, technical solutions and advantages of the embodiments of the present disclosure clearer, hereafter the technical solutions according to the embodiments of the present disclosure will be described clearly and completely in conjunction with the drawings in the embodiments of the present disclosure.

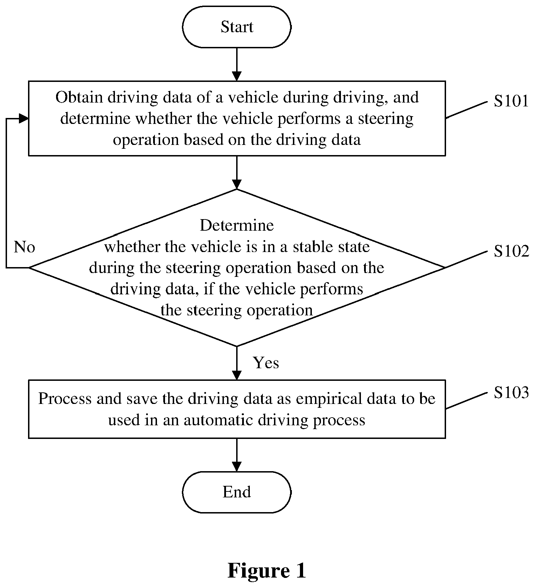

Reference is made to Figure 1, which is a flow chart of a method for extracting empirical data about vehicle driving according to an embodiment of the present disclosure.

The method for extracting empirical data about vehicle driving can make a vehicle more stable during an automatic driving process. The method may include the following steps S101 to S103.

In step 101, driving data of a vehicle is obtained during driving, and it is determined whether the vehicle performs a steering operation based on the driving data.

This step aims to obtain driving data of a vehicle during a manual driving process, and determine whether the vehicle performs a steering operation in real time based on the driving data.

The driving data refers to data about vehicle driving when a driver is driving the vehicle. The driving data may include status data of the vehicle on a road (for example, a distance between the vehicle and roadside, lane information about a lane where the vehicle is located, or data about a relationship between the vehicle and a lane line when the vehicle is driven on the lane), moving data of the vehicle (for example, vehicle speed, a steering angle of a steering wheel, and vehicle tire status), and geographic location information of the vehicle. The driving data of the vehicle in driving is obtained to comprehensively digitize states of the vehicle in driving, for a subsequent determination performed by a computer. The above information is obtained depending on a data collection apparatus such as a sensor installed in the vehicle, thus the driving data of the vehicle is obtained depending on the sensor installed in the vehicle. Therefore, the driving data are numerous and complicated with respect to specific contents, and there may be different types of driving data due to different apparatuses installed in the vehicle. However, different data may reflect one or more states of the vehicle regarding to different aspects. Therefore, the driving data are not specifically limited, and any data, based on which an operating state of the vehicle may be determined, may be used as the driving data in the embodiment.

In the technical solution, it is mainly to obtain empirical data of the vehicle during a steering operation, thus it is required to firstly determine whether the vehicle performs a steering operation. Changes in the state of the vehicle during the steering operation may be reflected in the driving data. Therefore in step S101, it is determined whether the vehicle performs a steering operation based on the driving data.

Generally, the steering operation refers to rotation of a steering wheel during driving, for example, a turning operation, a lane-change operation, and an operation for avoiding an obstacle. The steering operation performed by the vehicle may generally be regarded as forming a trajectory of a part of a circle, indicating the vehicle is doing centripetal movement during driving. The vehicle will be subjected to a centripetal force, causing rollover or other situations if the operation is improper.

Generally, the driver can ensure the stability of the vehicle based on skilled experience. In automatic driving, the vehicle calculates data (such as vehicle speed data, steering angle data) needed in steering based on current driving data to perform a steering operation, or performs real-time feedback adjustment based on a relationship between the vehicle and a road so as to steer. In the automatic driving, data for the steering operation is obtained based on a result of data calculation. If the data is reflected inaccurately or not in time, or if the data is wrong, it is easy to cause the vehicle to be in an unstable state during the steering operation, thereby causing safety problems.

Therefore in the embodiment, the driving data of the vehicle is obtained when the driver is driving the vehicle, thus to ensure the stability of the vehicle.

Further, in addition to obtaining the driving data of the vehicle when the driver is driving the vehicle in step S101, the driving data may also be obtained during an automatic driving operation, and the driving data obtained in the automatic driving operation may be used as empirical data to enhance learning function of the vehicle during the automatic driving operation.

In step S102, it is determined whether the vehicle is in a stable state during the steering operation based on the driving data, if the vehicle performs the steering operation.

Based on step S101, step S102 intends to determine whether the vehicle is in the stable state if the vehicle is steering.

In order to maintain the stability of the vehicle in using the empirical data, it is required to determine that the data of the vehicle during the steering operation is data of the vehicle in the stable state. Therefore, the step S102 is mainly to determine whether the vehicle is in the stable state based on the obtained driving data.

The stable state refers to a state in which a centripetal force supplying to the vehicle in steering is within a safe range. Whether the vehicle is in the stable state may be determined based on the driving data obtained in real time or may be determined by comparing the obtained driving data with recorded driving data of the vehicle in an unstable state. Specifically, different determination methods may be selected based on the driving data able to be obtained by the vehicle, which are not limited.

In the embodiment, it is determined whether the vehicle is in an unstable state by comparing road data in the obtained driving data with road data in pre-stored driving data of the vehicle in the unstable state.

In step S103, the driving data is processed and saved as empirical data to be used in an automatic driving process, if the vehicle is in the stable state during the steering operation.

Based on step S102, step S103 aims to process and save the driving data as the empirical data to be used in an automatic driving process if the vehicle is steering and in the stable state.

The driving data, as the empirical data, may be used in multiple ways. In one way, the driving data is processed to obtain a maximum allowable vehicle speed and a maximum allowable steering angle of the vehicle during steering as the empirical data, which is used to cooperate with another automatic driving mode and limit steering speeds and steering angles within a safe range when the vehicle is in automatic driving. In another way, the driving data may be processed to obtain typical steering speeds, typical steering angles, and typical movement trajectories of the vehicle under different conditions, and the vehicle may directly perform a steering operation based on a corresponding typical value when the vehicle is steering in automatic driving, to maintain the stability of the vehicle. Still in another way, the above two ways are combined to obtain a comprehensive way used in the automatic driving.

Therefore, different ways in using the driving data indicate different processing on the driving data as the empirical data, and different processing should be performed according to specific situations. The purpose of the processing on the driving data is to extract control data which can be used in automatic driving from the driving data.

In general, by obtaining driving data of the vehicle during a stable steering operation and using the driving data as empirical data in an automatic driving operation, it is possible to avoid single structure of steering data in automatic driving, thus to make a steering determination based on empirical data in the steering process, improve stability of the vehicle in the driving and steering operations, and keep safe driving of the vehicle.

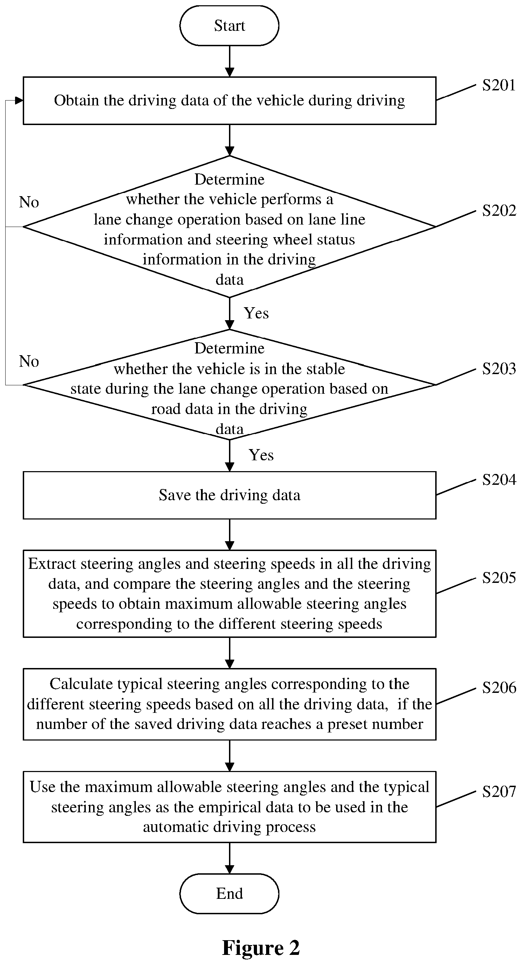

Reference is made to Figure 2, which is a flow chart of a method for extracting empirical data about vehicle driving according to another embodiment of the present disclosure.

The method for extracting empirical data about vehicle driving according to another embodiment can obtain the driving data of the vehicle during a lane-change operation as the empirical data, to improve the stability of the vehicle in an automatic lane-change operation. The method may include the following steps S201 to S207.

In step S201, the driving data of the vehicle is obtained during driving.

Step S201 aims to obtain the driving data, which is substantially the same as the driving data obtained in the above embodiment.

In step S202, it is determined whether the vehicle performs a lane-change operation based on lane line information and steering wheel status information in the driving data, where the lane-change operation is a kind of the steering operation.

Based on step S201, step S202 aims to determine whether the vehicle performs the lane-change operation based on the lane line information and the steering wheel status information in the driving data.

The lane line information is identified based on a lane line captured by a camera, reflecting which lane the vehicle is currently driving on. The lane line information may also be used to determine whether the vehicle performs a lane-change operation. The steering wheel status information is obtained by a sensor in a steering wheel. If both of the lane line information and the steering wheel status information reflect that the vehicle performs a lane-change operation , it may be determined that the vehicle does perform the lane-change operation.

In step S203, it is determined whether the vehicle is in a stable state during the lane-change operation based on road data in the driving data, if the vehicle performs the lane-change operation.

Based on step S202, step S203 aims to determine whether the vehicle is in the stable state during the lane-change operation based on road data in the driving data, after it is determined in the above step that the vehicle performs the lane-change operation.

It may be determined whether the vehicle is in the stable state during the lane-change operation only based on the road data in the driving data, or by comparing road data in the obtained driving data with road data in pre-stored driving data of the vehicle in an unstable state, which is not specifically limited here.

The determination based on the road data may intuitively show whether the vehicle body is in the stable state. A determination, based on other indirect data, may be inaccurate due to inaccurate and untimely data. Therefore, the determination on stability is made based on the road data in step S203.

In step S204, the driving data is saved if the vehicle is in the stable state during the lane-change operation.

Based on step S203, the driving data is saved if the vehicle body is in the stable state.

It should be noted that after the vehicle performs lane-change operation once, the recorded driving data may be used as the empirical data to be used in the automatic driving process. However, after the vehicle performs lane-change operations multiple times, multiple driving data of the vehicle during multiple lane-change operations under different conditions are saved, and the multiple driving data are synthetically processed to better ensure stability of the empirical data.

In step S205, steering angles and steering speeds in all the driving data are extracted, and the steering angles and the steering speeds are compared to obtain maximum allowable steering angles corresponding to different steering speeds.

Based on step S204, step S205 aims to extract steering angles and steering speeds in all the saved driving data, and compare all of the extracted steering angles and the steering speeds to obtain maximum allowable steering angles corresponding to the different steering speeds.

In automatic driving, most critical control variables for controlling the driving state of the vehicle are the steering speed and the steering angle during the steering process, and it is required to determine a maximum steering angle during the lane-change process based on empirical data, to avoid accidents during the steering process. Therefore, maximum allowable steering angles corresponding to different vehicle speeds at lane-change operation are obtained by comparison in step S205.

It should be noted that generally, steering operations of the steering wheel are performed twice during the lane-change operation of the vehicle, thus a maximum allowable steering angle should be obtained during the two lane-change operations, and be corresponded to its steering speed.

That is, different vehicle speeds and maximum allowable steering angles corresponding to the different vehicle speeds in various situations during the lane-change process are finally obtained.

In step S206, typical steering angles corresponding to the different steering speeds are calculated based on all the driving data, if the number of the driving data saved reaches a preset number.

Based on step S205, step S206 aims to calculate the typical steering angles corresponding to the different vehicle speeds based on all the driving data if the number of the driving data saved reaches the preset number. After a certain amount of driving data are obtained, a typical steering angle during a general lane-change process may be calculated based on all the data, as the empirical data to be used in the automatic driving process.

The preset number may be set according to actual situations. If the number of the saved driving data reaches the preset number, it may be determined that the obtained driving data can be used for automatic driving, and can maintain the stability and safety of the vehicle.

All the driving data may be listed to find all steering angle data corresponding to a same vehicle speed. Since the saved driving data are steering angle data of the vehicle during steering operations in actual situations, the saved driving data may be directly averaged to obtain a typical steering angle. A statistical operation may be performed on the driving data to obtain a median as the empirical data. A statistical operation may be performed on the driving data to obtain a mode as the empirical data. Specific operation may be determined according to the actual situation, which is not repeated herein.

In step 207, the maximum allowable steering angles and the typical steering angles are used as the empirical data to be used in the automatic driving process.

Based on step S206, step S207 aims to use the maximum allowable steering angles and the typical steering angles obtained in the above step as the empirical data to be used in the automatic driving process.

The maximum allowable steering angles, as the empirical data to be used in the automatic driving process, may limit the steering angle of the vehicle in the automatic driving process within a stable range. The typical steering angles, as the empirical data to be used in the automatic driving process, may be directly used for lane-change operation in the automatic driving process and maintain the stability of the vehicle.

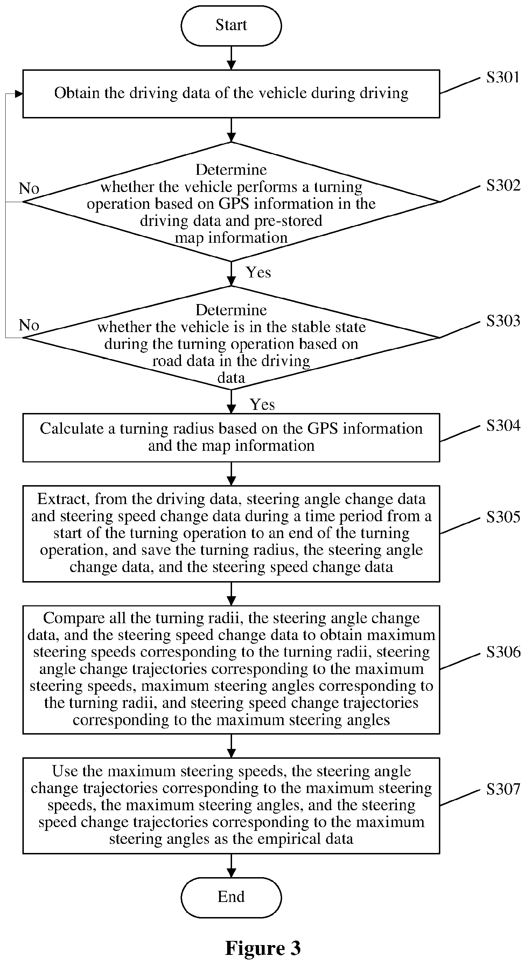

Reference is made to Figure 3, which is a flow chart of a method for extracting empirical data about vehicle driving according to still another embodiment of the present disclosure.

The method for extracting empirical data about vehicle driving according to the still another embodiment can obtain the driving data of the vehicle during the steering operation as the empirical data, to improve the stability of the vehicle in an automatic turning operation. The method may include the following steps S301 to S307.

In step S301, the driving data of the vehicle is obtained during driving.

Step S301 aims to obtain the driving data, which is substantially the same as the driving data obtained in the above embodiment.

In step S302, it is determined whether the vehicle performs a turning operation based on GPS information in the driving data and pre-stored map information, where the turning operation is a kind of steering operation.

Based on step S301, step S302 aims to determine whether the vehicle performs the turning operation based on GPS information and pre-stored map information.

The GPS information is geographic location information able to be obtained in the driving data. In connection with the geographic location information and the pre-stored map, it may be determined a position of the vehicle during driving, thereby determining whether the vehicle performs the turning operation based on the map. Therefore, the pre-stored map used in step S302 may be a high-precision map.

In step S303, it is determined whether the vehicle is in a stable state during the turning operation based on road data in the driving data, if the vehicle performs the turning operation.

Based on step S302, step S303 aims to determine whether the vehicle body is in the stable state based on the road data if the vehicle performs the turning operation.

Step S303 is substantially the same as the step in the above embodiment and thus may refer to the above embodiment, which is not repeated herein.

In step S304, a turning radius is calculated based on the GPS information and the pre-stored map information, if the vehicle is in the stable state during the turning operation.

Based on step S303, step S304 aims to calculate the turning radius in the turning operation based on the GPS information and the map information if the vehicle body is in the stable state.

The previous embodiment applies to the lane-change operation. Widths of lanes on which the vehicle is driven are similar in a same road environment, thus distances between the vehicle and the lanes before and after the lane-change operation are similar, and it is unnecessary to calculate a steering radius in the lane-change operation. However, the vehicle in driving encounters turns with different turning radii, and changes in the vehicle speed and the steering angle of the vehicle are different at turns with different turning radii, thus it is required to calculate turning radii according to different turning conditions in this embodiment.

In step S305, steering angle change data and steering speed change data during a time period from a start of the turning operation to an end of the turning operation are extracted from the driving data, and the turning radius, the steering angle change data, and the steering speed change data are saved.

Based on step S304, step S305 aims to extract and save steering angle change data and steering speed change data during the time period from a start of the turning operation to an end of the turning operation in the driving data.

Since the turning operation is generally a long-time process, and the vehicle speed and the steering angle of the vehicle during the turning operation continuously change, data on changes in the vehicle speed and the steering angle of the vehicle are obtained in the embodiment.

In step S306, all of the turning radius, the steering angle change data, and the steering speed change data are compared to obtain a maximum steering speed and a related steering angle change trajectory, a maximum steering angle and a related steering speed change trajectory at the turning radius..

Based on step S305, step S306 aims to compare the above data to obtain the maximum steering speed, the related steering angle change trajectory, the maximum steering angle and related steering speed change trajectory at the turning radius, that is, a time-based correspondence between different vehicle speeds and different steering angles of the vehicle with respect to a same turning radius.

In step S307, the maximum steering speed, the related steering angle change trajectory, the maximum steering angle, and the related steering speed change trajectory are used as the empirical data.

Based on step S306, step S307 aims to use the maximum steering speed, the related steering angle change trajectory, the maximum steering angle, and the related steering speed change trajectory as the empirical data.

In automatic driving, the maximum of the vehicle speed and the maximum of the steering angle of the vehicle during the turning operation may be limited according to the maximum steering speed and the maximum steering angle, to keep the vehicle speed and the steering angle within a stable range, and improve the safety of automatic driving.

In an embodiment, the method in the above embodiment may further include the following steps 1 to 3.

In step 1, an average of the steering speed change data corresponding to a same turning radius is calculated, to obtain a typical steering speed, if the number of the turning radius, the steering angle change data, and the steering speed change data saved reaches a preset number.

Step 1 aims to obtain a typical steering speed corresponding to a same turning radius. Since the speed of the vehicle during the turning operation does not change a lot, the typical steering speed corresponding to the turning radius may be calculated based on multiple data.

In step 1, the typical steering speed is obtained by averaging. The typical steering speed may be calculated by other statistical methods. A specific calculation should be selected according to a specific situation, which is not repeated herein.

In step 2, the steering angle change data corresponding to the same turning radius are calculated according to a change rule, to obtain a typical steering angle trajectory.

Based on the step 1, since degree of change in the steering angle of the vehicle during the turning operation is large, it is required to obtain a typical change trajectory of the steering angle.

Therefore, the typical steering angle trajectory may be calculated based on a change rule of multiple steering angle change trajectories corresponding to a same turning radius. If the steering angle change trajectories change with time, then it is to obtain steering angles at a certain time interval in each change trajectory, and statistical calculation is performed on the steering angles corresponding to a same time period to obtain a typical steering angle with regard to this time period. Then, typical steering angles with regard to all other time periods are calculated, and all the typical steering angles are combined over time, to form the typical steering angle trajectory.

Different calculation methods may be selected according to different change rules, which is not repeated here.

In step 3, the typical steering speed and the typical steering angle trajectory are used as the empirical data.

By using the typical steering speed and typical steering angle trajectory as the empirical data, the stability and safety of the vehicle during the turning operation can be improved.

The method for extracting empirical data about vehicle driving according to the embodiment of the present disclosure can obtain driving data of the vehicle during a stable steering operation and use the driving data as empirical data to be used in an automatic driving operation, thus it is possible to avoid a single structure of steering data in automatic driving, and make a steering determination based on empirical data in the steering process, to improve stability of the vehicle in the driving and steering operations and keep safe driving of the vehicle.

A device for extracting empirical data about vehicle driving according to an embodiment of the present disclosure is described below. The device for extracting empirical data about vehicle driving described below and the method for extracting empirical data about vehicle driving described above can be referred to each other.

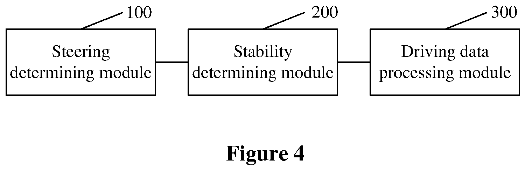

Reference is made to Figure 4, which is a schematic structural diagram of the device for extracting empirical data about vehicle driving according to an embodiment of the present disclosure.

The device for extracting empirical data about vehicle driving according to the embodiment includes a steering determining module 100, a stability determining module 200, and a driving data processing module 300.

The steering determining module 100 is configured to obtain driving data of a vehicle during driving, and determine whether the vehicle performs a steering operation based on the driving data.

The stability determining module 200 is configured, if the vehicle performs the steering operation, to determine whether the vehicle is in a stable state during the steering operation based on the driving data.

The driving data processing module 300 is configured to process and save the driving data as empirical data to be used in an automatic driving process.

Based on the above device, following method may be implemented.

### For a lane-change process of a vehicle

If the vehicle is in a manual driving mode, a control unit monitors data collected by a perception unit in real time, especially data collected by a camera which includes lane line information, information on obstacles ahead, and the like, and stores these information in a memory of the controller temporarily.

The control unit makes a steering determination based on the collected lane line information. The control unit determines that the vehicle performs a lane-change operation, if the lane line is changed towards the left or right and at the same time a steering wheel is rotated toward to the left or right.

Further, the control unit reads road data collected by the camera during the lane-change process of the vehicle, compares the road data collected by the camera with road data which is stored in the control unit and collected when the vehicle body is in an unstable state, to determine whether the vehicle body is in a stable state during the lane-change operation. It is to discard all data during this lane-change process if the vehicle body is in an unstable state during the lane-change process, and it is to retain the current temporarily stored data if the vehicle body is in the stable state during the lane-change process.

Further, vehicle speed change data, steering wheel angle change data, and lane line change data in the lane-change process are stored in a lane change data list. The control unit sets a maximum allowable number of the lane change data list. If the number of the stored lane change data lists exceeds the maximum allowable number, it is considered that the current data is successfully obtained, and it is unnecessary to collect and compare corresponding data again.

Further, if a lane change data list is newly added, a corresponding relationship between a vehicle speed and a steering wheel steering angle is extracted from the newly added lane change process data list, and is compared with different vehicle speeds and corresponding maximum steering wheel steering angles previously obtained, to find a maximum steering wheel steering angle, and update the maximum allowable steering wheel steering angles corresponding to different vehicle speeds.

Further, if the number of the stored lane change data lists reaches the maximum allowable number, the control unit extracts all the data related to the lane-change process and performs an average algorithm on the data to obtain typical data related to the lane-change process corresponding to different vehicle speeds, that is, change trajectories of the steering wheel steering angles corresponding to different vehicle speeds are extracted.

Thus, empirical data of the vehicle in a lane change process is obtained.

### For a turning process of a vehicle

If the vehicle is in a manual driving mode, a control unit monitors data collected by a perception unit in real time, especially GPS location information data which includes latitude and longitude information, vehicle speed information, and the like, and stores these information in a memory of the controller temporarily.

The control unit compares the collected GPS location information with a high-precision map, to calculate a turning radius of the vehicle in a turning operation, and determines whether the vehicle has completed the turning operation.

Further, the control unit reads road data collected by the camera during the turning process of the vehicle, and as the processing in the lane-change operation, compares the road data collected by the camera with road data which is stored in the control unit and collected when the vehicle body is in an unstable state, to determine whether the vehicle body is in a stable state.

Further, the calculated turning radius, vehicle speed change data, and steering wheel angle change data in the turning process are stored in a turning process data list. The control unit sets a maximum allowable number of the turning process data list (which far exceeds the maximum allowable number of the lane change process data list), and determines whether the number of the currently stored turning process data lists exceeds the maximum allowable number, which is the same as the data processing in the lane change process.

Further, if a turning process data list is newly added, a corresponding relationship among a turning radius, a vehicle speed and a steering wheel steering angle in this turning process is extracted from the new turning process data list, and is compared with maximum vehicle speeds and maximum steering wheel steering angles corresponding to different turning radii which are previously obtained, to find a maximum vehicle speed, a steering angle trajectory corresponding to the maximum vehicle speed, a maximum steering angle, and a speed change trajectory corresponding to the maximum steering angle, with regard to the current turning radius, and updates the turning process data list.

Further, if the number of the stored turning process data list exceeds the maximum allowable number, the control unit extracts vehicle speeds and steering wheel steering angle trajectories corresponding to different turning radii. The control unit performs an average algorithm to obtain typical turning vehicle speeds corresponding to different turning radii, and then obtains typical steering wheel steering angle trajectories based on the typical turning vehicle speeds.

Thus, empirical data of the vehicle in the turning process is obtained.

A vehicle according to an embodiment of the present disclosure includes: a sensor and a processor.

The sensor is configured to obtain driving data of a vehicle during driving.

The processor is configured to determine whether the vehicle performs a steering operation based on the driving data; determine whether the vehicle is in a stable state during the steering operation based on the driving data, if the vehicle performs the steering operation; and process and save the driving data as empirical data to be used in an automatic driving process, if the vehicle is in the stable state during the steering operation.

The embodiments in the specification are described in a progressive way, each of which emphasizes the differences from others, and the same or similar parts among the embodiments can be referred to each other. Since the device disclosed in the embodiments corresponds to the method therein, the description thereof is relatively simple, and for relevant matters references may be made to the description of the method.

It may be realized by those skilled in the art that, units and steps in each method described in conjunction with the embodiments disclosed herein can be realized by electronic hardware, computer software or a combination thereof. In order to clearly illustrate interchangeability of the hardware and the software, steps and composition of each embodiment have been described generally in view of functions in the above specification. Whether the function is executed in a hardware way or in a software way depends on application of the technical solution and design constraint condition. Those skilled in the art can use different method for each application to realize the described function, and this is not considered to be beyond the scope of the application.

The steps of the methods or algorithms described in conjunction with the embodiments of the present disclosure can be implemented with hardware, software modules executed by a processor, or a combination thereof. The software modules may reside in a Random Access Memory (RAM), an internal memory, a Read Only Memory (ROM), an Electrically Programmable ROM, an Electrically-Erasable Programmable ROM, a register, a hard disk, a removable disk drive, CD-ROM, or other types of storage media well known in the technical field.

A method and device for extracting empirical data about vehicle driving, and a vehicle according to the present disclosure are described in detail hereinbefore. The principle and the implementation of the present disclosure are illustrated herein by specific examples. The above description of examples is only intended to help the understanding of the method and idea of the present disclosure.

## Claims

1. A method for extracting empirical data about vehicle driving, comprising:
obtaining (S201) driving data of a vehicle during driving;
determining (S202) whether the vehicle performs a lane change operation based on lane line information and steering wheel status information in the driving data, wherein the lane change operation is a kind of steering operation;
determining (S203) whether the vehicle is in a stable state during the lane change operation based on road data in the driving data, if the vehicle performs the lane change operation;
saving the driving data (S204) if the vehicle is in the stable state during the lane change operation;
extracting steering angles and steering speeds in all the driving data, and comparing the steering angles and the steering speeds to obtain maximum allowable steering angles corresponding to different steering speeds (S205);
calculating (S206) typical steering angles corresponding to the different steering speeds based on all the driving data, if the number of the driving data saved reaches a preset number; and
using (S207) the maximum allowable steering angles and the typical steering angles as empirical data to be used in an automatic driving process.

2. A method for extracting empirical data about vehicle driving, comprising:
obtaining (S301) driving data of a vehicle during driving;
determining (S302) whether the vehicle performs a turning operation based on GPS information in the driving data and pre-stored map information, wherein the turning operation is a kind of steering operation;
determining (S303) whether the vehicle is in a stable state during the turning operation based on road data in the driving data, if the vehicle performs the turning operation;
calculating (S304) a turning radius based on the GPS information and the map information, if the vehicle is in the stable state during the turning operation;
extracting, from the driving data, steering angle change data and steering speed change data during a time period from a start of the turning operation to an end of the turning operation, and saving the turning radius, the steering angle change data, and the steering speed change data (S305);
comparing (S306) all of the turning radius, the steering angle change data and the steering speed change data to obtain a maximum steering speed and a related steering angle change trajectory, a maximum steering angle and a related steering speed change trajectory at the turning radius; and
using (S307) the maximum steering speed, the related steering angle change trajectory, the maximum steering angle and the related steering speed change trajectory, as empirical data to be used in an automatic driving process.

3. The method for extracting empirical data according to claim 2, further comprising:
calculating an average of the steering speed change data corresponding to a same turning radius to obtain a typical steering speed, if the number of the turning radius, the steering angle change data, and the steering speed change data saved reaches a preset number;
calculating a typical steering angle trajectory based on a change rule of the steering angle change data corresponding to the same turning radius ; and
using the typical steering speed and the typical steering angle trajectory as the empirical data.

4. A vehicle, comprising:
a sensor, configured to obtain driving data of a vehicle during driving; and
a processor, configured to:
determine whether the vehicle performs a lane change operation based on lane line information and steering wheel status information in the driving data, wherein the lane change operation is a kind of steering operation;
determine whether the vehicle is in a stable state during the lane change operation based on road data in the driving data, if the vehicle performs the lane change operation;
save the driving data if the vehicle is in the stable state during the lane change operation;
extract steering angles and steering speeds in all the driving data, and comparing the steering angles and the steering speeds to obtain maximum allowable steering angles corresponding to different steering speeds;
calculate typical steering angles corresponding to the different steering speeds based on all the driving data, if the number of the driving data saved reaches a preset number; and
use the maximum allowable steering angles and the typical steering angles as empirical data to be used in an automatic driving process.

5. A vehicle, comprising:
a sensor, configured to obtain driving data of a vehicle during driving; and
a processor, configured to:
determine whether the vehicle performs a turning operation based on GPS information in the driving data and pre-stored map information, wherein the turning operation is a kind of steering operation;
determine whether the vehicle is in a stable state during the turning operation based on road data in the driving data, if the vehicle performs the turning operation;
calculate a turning radius based on the GPS information and the map information, if the vehicle is in the stable state during the turning operation;
extract, from the driving data, steering angle change data and steering speed change data during a time period from a start of the turning operation to an end of the turning operation, and save the turning radius, the steering angle change data, and the steering speed change data;
compare all of the turning radius, the steering angle change data and the steering speed change data to obtain a maximum steering speed and a related steering angle change trajectory, a maximum steering angle and a related steering speed change trajectory at the turning radius; and
use the maximum steering speed, the related steering angle change trajectory, the maximum steering angle and the related steering speed change trajectory, as empirical data to be used in an automatic driving process.

## Patentansprüche

1. Verfahren zum Extrahieren empirischer Daten über das Fahren eines Fahrzeugs, umfassend:
Erhalten (S201) von Fahrdaten eines Fahrzeugs während des Fahrens;
Bestimmen (S202), ob das Fahrzeug einen Spurwechselvorgang durchführt, anhand von Spurlinieninformationen und Lenkrad-Statusinformationen in den Fahrdaten, wobei der Spurwechselvorgang eine Art Lenkvorgang ist;
Bestimmen (S203), ob das Fahrzeug während des Spurwechselvorgangs in einem stabilen Zustand ist, anhand von Straßendaten in den Fahrdaten, wenn das Fahrzeug den Spurwechselvorgang durchführt;
Speichern der Fahrdaten (S204), wenn sich das Fahrzeug während des Spurwechselvorgangs im stabilen Zustand befindet;
Extrahieren von Lenkwinkeln und Lenkgeschwindigkeiten in allen Fahrdaten und Vergleichen der Lenkwinkel und der Lenkgeschwindigkeiten, um maximal zulässige Lenkwinkel zu erhalten, die verschiedenen Lenkgeschwindigkeiten entsprechen (S205);
Berechnen (S206) von typischen Lenkwinkeln, die den verschiedenen Lenkgeschwindigkeiten entsprechen, anhand von allen Fahrdaten, wenn die Anzahl der gespeicherten Fahrdaten eine vorgegebene Anzahl erreicht; und
Verwenden (S207) der maximal zulässigen Lenkwinkel und der typischen Lenkwinkel als empirische Daten, die in einem automatischen Fahrvorgang verwenden werden.

2. Verfahren zum Extrahieren empirischer Daten über das Fahren eines Fahrzeugs, umfassend:
Erhalten (S301) von Fahrdaten eines Fahrzeugs während des Fahrens;
Bestimmen (S302), ob das Fahrzeug einen Wendevorgang durchführt, anhand von GPS-Informationen in den Fahrdaten und vorgespeicherten Karteninformationen, wobei der Wendevorgang eine Art Lenkvorgang ist;
Bestimmen (S303), ob das Fahrzeug während des Wendevorgangs in einem stabilen Zustand ist, anhand von Straßendaten in den Fahrdaten, wenn das Fahrzeug den Wendevorgangs durchführt;
Berechnen (S304) eines Wenderadius anhand der GPS-Informationen und der Karteninformationen, wenn sich das Fahrzeug während des Wendevorgangs in einem stabilen Zustand befindet;
Extrahieren von Lenkwinkel-Änderungsdaten und Lenkgeschwindigkeits-Änderungsdaten aus den Fahrdaten während eines Zeitraums von einem Start des Wendevorgangs bis zu einem Ende des Wendevorgangs, und Speichern des Wenderadius, der Lenkwinkel-Änderungsdaten und der Lenkgeschwindigkeits-Änderungsdaten (S305);
Vergleichen (S306) aller Daten des Wenderadius, der Lenkwinkel-Änderungsdaten und der Lenkgeschwindigkeits-Änderungsdaten, um eine maximale Lenkgeschwindigkeit und einen zugehörigen Lenkwinkel-Änderungsverlauf, einen maximalen Lenkwinkel und einen zugehörigen Lenkgeschwindigkeits-Änderungsverlauf bei dem Wenderadius zu erhalten; und
Verwenden (S307) der maximalen Lenkgeschwindigkeit, des zugehörigen Lenkwinkel-Änderungsverlaufs, des maximalen Lenkwinkels und des zugehörigen Lenkgeschwindigkeits-Änderungsverlaufs als empirische Daten, die in einem automatischen Fahrvorgang verwendet werden.

3. Verfahren zum Extrahieren empirischer Daten nach Anspruch 2, ferner umfassend:
Berechnen eines Durchschnitts der Lenkgeschwindigkeits-Änderungsdaten, die einem gleichen Wenderadius entsprechen, um eine typische Lenkgeschwindigkeit zu erhalten, wenn die Anzahl der gespeicherten Wenderadius-, Lenkwinkel-Änderungsdaten und Lenkgeschwindigkeits-Änderungsdaten eine vorgegebene Anzahl erreicht;
Berechnen eines typischen Lenkwinkelverlaufs anhand einer Änderungsregel der Lenkwinkel-Änderungsdaten, die demselben Wenderadius entsprechen; und
Verwenden der typischen Lenkgeschwindigkeit und des typischen Lenkwinkelverlaufs als empirische Daten.

4. Fahrzeug, umfassend:
einen Sensor, der so konfiguriert ist, dass er Fahrdaten eines Fahrzeugs während des Fahrens erhält; und
einen Prozessor, der konfiguriert ist zum:
Bestimmen, ob das Fahrzeug einen Spurwechselvorgang durchführt, anhand von Spurlinieninformationen und Lenkrad-Statusinformationen in den Fahrdaten, wobei der Spurwechselvorgang eine Art Lenkvorgang ist;
Bestimmen, ob das Fahrzeug während des Spurwechselvorgangs in einem stabilen Zustand ist, anhand von Straßendaten in den Fahrdaten, wenn das Fahrzeug den Spurwechselvorgang durchführt;
Speichern der Fahrdaten, wenn sich das Fahrzeug während des Spurwechselvorgangs in einem stabilen Zustand befindet;
Extrahieren von Lenkwinkeln und Lenkgeschwindigkeiten aus allen Fahrdaten und Vergleichen der Lenkwinkel und der Lenkgeschwindigkeiten, um maximal zulässige Lenkwinkel zu erhalten, die verschiedenen Lenkgeschwindigkeiten entsprechen;
Berechnen von typischen Lenkwinkeln, die den verschiedenen Lenkgeschwindigkeiten entsprechen, anhand von allen Fahrdaten, wenn die Anzahl der gespeicherten Fahrdaten eine vorgegebene Anzahl erreicht; und
Verwenden der maximal zulässigen Lenkwinkel und der typischen Lenkwinkel als empirische Daten, die in einem automatischen Fahrvorgang verwenden werden.

5. Fahrzeug, umfassend:
einen Sensor, der so konfiguriert ist, dass er Fahrdaten eines Fahrzeugs während des Fahrens erhält; und
einen Prozessor, der konfiguriert ist zum:
Bestimmen, ob das Fahrzeug einen Wendevorgang durchführt, anhand von GPS-Informationen in den Fahrdaten und vorgespeicherten Karteninformationen, wobei der Wendevorgang eine Art Lenkvorgang ist;
Bestimmen, ob das Fahrzeug während des Wendevorgangs in einem stabilen Zustand ist, anhand von Straßendaten in den Fahrdaten, wenn das Fahrzeug den Wendevorgangs durchführt;
Berechnen eines Wenderadius anhand der GPS-Informationen und der Karteninformationen, wenn sich das Fahrzeug während des Wendevorgangs in einem stabilen Zustand befindet;
Extrahieren von Lenkwinkel-Änderungsdaten und Lenkgeschwindigkeits-Änderungsdaten aus den Fahrdaten während eines Zeitraums von einem Start des Wendevorgangs bis zu einem Ende des Wendevorgangs, und Speichern des Wenderadius, der Lenkwinkel-Änderungsdaten und der Lenkgeschwindigkeits-Änderungsdaten;
Vergleichen aller Daten des Wenderadius, der Lenkwinkel-Änderungsdaten und der Lenkgeschwindigkeits-Änderungsdaten, um eine maximale Lenkgeschwindigkeit und einen zugehörigen Lenkwinkel-Änderungsverlauf, einen maximalen Lenkwinkel und einen zugehörigen Lenkgeschwindigkeits-Änderungsverlauf bei dem Wenderadius zu erhalten; und
Verwenden der maximalen Lenkgeschwindigkeit, des zugehörigen Lenkwinkel-Änderungsverlaufs, des maximalen Lenkwinkels und des zugehörigen Lenkgeschwindigkeits-Änderungsverlaufs als empirische Daten, die in einem automatischen Fahrvorgang verwendet werden.

## Revendications

1. Procédé d'extraction de données empiriques concernant la conduite d'un véhicule, le procédé comprenant :
l'obtention (S201) de données de conduite d'un véhicule pendant la conduite ;
la détermination (S202) pour savoir si le véhicule effectue une manoeuvre de changement de voie sur la base d'informations de ligne de délimitation des voies et d'informations de condition du volant dans les données de conduite, la manoeuvre de changement de voie étant un type de manoeuvre de braquage ;
la détermination (S203) pour savoir si le véhicule est en état stable pendant la manoeuvre de changement de voie sur la base de données de route dans les données de conduite, si le véhicule effectue la manoeuvre de changement de voie ;
la sauvegarde des données de conduite (S204) si le véhicule est en état stable pendant la manoeuvre de changement de voie ;
l'extraction d'angles de braquage et de vitesses de braquage dans toutes les données de conduite, et la comparaison des angles de braquage et des vitesses de braquage afin d'obtenir des angles de braquage permissibles maximaux correspondant aux différentes vitesses de braquage (S205) ;
le calcul (S206) des angles de braquage habituels correspondant aux différentes vitesses de braquage sur la base de toutes les données de conduite, si le nombre de données de conduite sauvegardées atteint un nombre prédéfini ; et
l'utilisation (S207) des angles de braquage permissibles maximaux et des angles de braquage habituels en tant que données empiriques à utiliser dans un procédé de conduite automatique.

2. Procédé d'extraction de données empiriques concernant la conduite d'un véhicule, le procédé comprenant :
l'obtention (S301) de données de conduite d'un véhicule pendant la conduite ;
la détermination (S302) pour savoir si le véhicule effectue une manoeuvre de virage sur la base d'informations de GPS dans les données de conduite et d'informations de carte pré-stockées, la manoeuvre de virage étant un type de manoeuvre de braquage ;
la détermination (S303) pour savoir si le véhicule est en état stable pendant la manoeuvre de virage sur la base de données de route dans les données de conduite, si le véhicule effectue la manoeuvre de virage ;
le calcul (S304) d'un rayon de virage sur la base des informations de GPS et des informations de carte, si le véhicule est en état stable pendant la manoeuvre de virage ;
l'extraction, à partir des données de conduite, de données de changement d'angle de braquage et de données de changement de vitesse de braquage pendant une période de temps allant du début de la manoeuvre de virage jusqu'à la fin de la manoeuvre de virage, et la sauvegarde du rayon de virage, des données de changement d'angle de braquage et des données de changement de vitesse de braquage (S305) ;
la comparaison (S306) de l'ensemble du rayon de virage, des données de changement d'angle de braquage et des données de changement de vitesse de braquage, afin d'obtenir une vitesse de braquage maximale et une trajectoire de changement d'angle de braquage connexe, un angle de braquage maximal et une trajectoire de changement de vitesse de braquage connexe au niveau du rayon de virage ; et
l'utilisation (S307) de la vitesse de braquage maximale, de la trajectoire de changement d'angle de braquage connexe, de l'angle de braquage maximal et de la trajectoire de changement de vitesse de braquage connexe, en tant que données empiriques à utiliser dans un procédé de conduite automatique.

3. Le procédé d'extraction de données empiriques selon la revendication 2, comprenant en outre :
le calcul d'une moyenne des données de changement de vitesse de braquage correspondant à un même rayon de virage, afin d'obtenir une vitesse de braquage habituelle, si le nombre des rayons de virage, des données de changement d'angle de braquage et des données de changement de vitesse de braquage sauvegardés atteint un nombre prédéfini ;
le calcul d'une trajectoire d'angle de braquage habituelle sur la base d'une règle de changement des données de changement d'angle de braquage correspondant au même rayon de virage ; et
l'utilisation de la vitesse de braquage habituelle et de la trajectoire d'angle de braquage habituelle en tant que données empiriques.

4. Véhicule comprenant :
un capteur, conçu pour obtenir des données de conduite d'un véhicule pendant la conduite ; et
un processeur, conçu pour :
déterminer si le véhicule effectue une manoeuvre de changement de voie sur la base d'informations de ligne de délimitation des voies et d'informations de condition du volant dans les données de conduite, la manoeuvre de changement de voie étant un type de manoeuvre de braquage ;
déterminer si le véhicule est en état stable pendant la manoeuvre de changement de voie sur la base de données de route dans les données de conduite, si le véhicule effectue la manoeuvre de changement de voie ;
sauvegarder les données de conduite si le véhicule est en état stable pendant la manoeuvre de changement de voie ;
extraire des angles de braquage et des vitesses de braquage dans toutes les données de conduite, et comparer les angles de braquage et les vitesses de braquage afin d'obtenir des angles de braquage permissibles maximaux correspondant aux différentes vitesses de braquage ;
calculer des angles de braquage habituels correspondant aux différentes vitesses de braquage sur la base de toutes les données de conduite, si le nombre de données de conduite sauvegardées atteint un nombre prédéfini ; et
utiliser les angles de braquage permissibles maximaux et les angles de braquage habituels en tant que données empiriques à utiliser dans un procédé de conduite automatique.

5. Véhicule comprenant :
un capteur, conçu pour obtenir des données de conduite d'un véhicule pendant la conduite ; et
un processeur, conçu pour :
déterminer si le véhicule effectue une manoeuvre de virage sur la base d'informations de GPS dans les données de conduite et d'informations de carte pré-stockées, la manoeuvre de virage étant un type de manoeuvre de braquage ;
déterminer si le véhicule est en état stable pendant la manoeuvre de virage sur la base de données de route dans les données de conduite, si le véhicule effectue la manoeuvre de virage ;
calculer un rayon de virage sur la base des informations de GPS et des informations de carte, si le véhicule est en état stable pendant la manoeuvre de virage ;
extraire, à partir des données de conduite, des données de changement d'angle de braquage et des données de changement de vitesse de braquage pendant une période de temps allant du début de la manoeuvre de virage jusqu'à la fin de la manoeuvre de virage, et sauvegarder le rayon de virage, les données de changement d'angle de braquage et les données de changement de vitesse de braquage ;
comparer l'ensemble du rayon de virage, des données de changement d'angle de braquage et des données de changement de vitesse de braquage, afin d'obtenir une vitesse de braquage maximale et une trajectoire de changement d'angle de braquage connexe, un angle de braquage maximal et une trajectoire de changement de vitesse de braquage connexe au niveau du rayon de virage ; et
utiliser la vitesse de braquage maximale, la trajectoire de changement d'angle de braquage connexe, l'angle de braquage maximal et la trajectoire de changement de vitesse de braquage connexe, en tant que données empiriques à utiliser dans un procédé de conduite automatique.
